# EUROPEAN PATENT SPECIFICATION

(11) **EP 3 789 352 B1**
(45) Date of publication and mention of the grant of the patent: **01.06.2022**
(21) Application number: 19195315.7
(22) Date of filing: 04.09.2019
(51) Int. Cl.: C02F 9/00, C02F 1/66, C02F 1/70, C02F 1/72, C02F 1/54, C02F 1/28, C02F 1/00, C02F 1/38, C02F 103/36, C02F 103/14, C02F 101/38, C02F 1/52, C02F 101/34, C02F 103/38

(54) **PROCESS FOR TREATMENT OF WASTEWATER CONTAINING PHENOL, ANILINE OR DERIVATIVES THEREOF**
VERFAHREN ZUR BEHANDLUNG VON ABWASSER, DAS PHENOL, ANILIN ODER DERIVATE DAVON ENTHÄLT
PROCÉDÉ DE TRAITEMENT DES EAUX USÉES CONTENANT DU PHÉNOL, DE L'ANILINE OU LEURS DÉRIVÉS

(43) Date of publication of application: 10.03.2021
(73) Proprietor: Clariant Plastics & Coatings Ltd, 4132 Muttenz (CH)
(72) Inventor: HALDER, Somnath, Mumbai, 400076 Maharashtra (IN); DUBEY, Ramashankar, Navi Mumbai Maharashtra, Pin 410209 (IN)
(74) Representative: Rippel, Hans Christoph

(56) References cited:
- CN-A- 102 001 765
- CN-A- 108 892 270
- CN-B- 104 628 195
- DE-A1- 4 343 263
- US-A- 4 115 380
- US-A1- 2013 041 188

## Description

### FIELD

The present disclosure relates to a process for treatment of wastewater.

### BACKGROUND

Manufacturing units, mainly in chemical and pharmaceutical industries, lead to the generation of high quantities of effluent wastewater that mainly contain unconsumed raw materials and reagents as contaminants. Such effluent is required to be appropriately treated, as the presence of contaminants is detrimental to the environment.

The effluent wastewater from polymer industries contains a high amount of phenol as one of the contaminants. Phenol is highly corrosive in nature, which has toxic effects not only on humans, but also on aquatic life. Other industries that manufacture dyes, pesticides and varnishes, generate contaminants such as aniline in the wastewater. Aniline is also highly toxic to the human body and can have lethal effects if swallowed, inhaled or absorbed through skin.

Current methods for removing phenol or aniline from industrial wastewater include chemical oxidation, stripping, solvent extraction, thermolysis and various biological treatments. The methods such as photo-decomposition and biological treatment, lead to the degradation/decomposition of phenol/aniline resulting in no recovery, whereas the methods such as nano-filtration, electro-coagulation, adsorption that recover the unreacted material from wastewater, are either expensive, ineffective for huge amount of effluent water or else employ huge volumes of solvents/reagents. Further, the methods are time-consuming and/or ineffective at removing phenol or aniline upto ppm level. Some methods that are effective, incur high costs, making the overall process uneconomical.

It is known to determine phenol content in wastewater sample by measuring absorption characteristics, after reacting the phenol in the water sample with an excess of diazotized sulfanilic acid in an alkaline medium (RU2533322C1). However, the method is directed to the determination of phenol content and does not relate to the treatment of wastewater.

WO2010151677A1 discloses a process for removing organic amines and phenol from wastewater by contacting with activated carbon at varying pH. However, the process discloses treatment of wastewater having concentration of phenol upto 1000 ppm and organic amines upto 10,000 ppm. Hence, the process is not effective for high concentrations of phenol/aniline in wastewater.

Further, a process to remove phenol from wastewater by using water-insoluble, polymeric diazonium salts is also disclosed in DE4343263A1. However, such diazotized polymers are relatively expensive. Moreover, such process leads to the recovery of phenol/aniline as a polymeric azo dye, which may not have any commercial value.

There is, therefore, felt a need to provide a simple, economical and environment friendly process for the treatment of wastewater that mitigates the drawbacks mentioned herein above.

### OBJECTS

Some of the objects of the present disclosure, which at least one embodiment herein satisfies, are as follows:
It is an object of the present disclosure to ameliorate one or more problems of the prior art or to at least provide a useful alternative.

Another object of the present disclosure is to provide a simple, environment friendly and economical process for the treatment of industrial wastewater.

Still another object of the present disclosure is to provide a process for the treatment of industrial wastewater containing phenol or derivatives thereof and/or aniline or derivatives thereof.

Other objects and advantages of the present disclosure will be more apparent from the following description, which is not intended to limit the scope of the present disclosure.

### SUMMARY

In one aspect, the present disclosure provides a process for treatment of wastewater containing phenol or derivatives thereof. The process comprises a step of adjusting the pH of the wastewater to more than 9 to obtain phenoxide ions. The pH adjusted wastewater is cooled to temperature below 10 °C. The pH adjusted wastewater, containing phenoxide ions, is added to an aqueous slurry of diazonium salt of aniline or derivatives thereof, slowly under stirring, at a temperature below 10 °C, to obtain a reaction mixture. The pH of the reaction mixture is adjusted in the range of 5 to 7.5, and stirred at a temperature in the range of 20 °C to 30 °C to obtain a product mixture comprising an azo compound, wherein the azo compound is 4-hydroxyazobenzene or derivatives thereof. The azo compound is separated from the product mixture to obtain a filtrate containing treated water, wherein the content of phenol or derivatives thereof, in the filtrate is less than 200 ppm. This aspect is reflected in claims 1-6 defining the scope of the present invention.

In an embodiment, the amount of phenol or derivatives thereof, in the waste water is in the range of 0.1 wt.% to 50 wt.%.

In another aspect, the present disclosure provides a process for treatment of wastewater containing aniline or derivatives thereof. The process comprises a step of adjusting the pH of the wastewater to less than 2. The pH adjusted wastewater is cooled to a temperature in the range of 0 °C to 5 °C. The aniline or derivatives thereof, in the pH adjusted wastewater, is diazotized by reacting with an alkali metal nitrite and hydrochloric acid, at a temperature in the range of 0 °C to 5 °C, to obtain diazonium salt of aniline or derivatives thereof. Phenoxide ions are added to the diazonium salt of aniline or derivatives thereof, slowly under stirring, at a temperature below 10 °C, to obtain a reaction mixture. The pH of the reaction mixture is adjusted in the range of 5 to 7.5, and stirred at a temperature in the range of 20 °C to 30 °C to obtain a product mixture comprising an azo compound, wherein the azo compound is 4-hydroxyazobenzene or derivatives thereof. The azo compound is separated from the product mixture to obtain a filtrate containing treated water, wherein the content of aniline or derivatives thereof, in the filtrate is less than 100 ppm.

This aspect is reflected in claims 7-11 defining the scope of the present invention.

In an embodiment, the amount of aniline or derivatives thereof, in the waste water is in the range of 0.1 wt.% to 50 wt.%.

In yet another aspect, the present disclosure provides a process for treatment of wastewater containing a combination of aniline or derivatives thereof and phenol or derivatives thereof. The process comprises a step of pre-determining the concentration of aniline or derivatives thereof and phenol or derivatives thereof, in the wastewater. The molar ratio of phenol or derivatives thereof to aniline or derivatives thereof, in the waste water, is adjusted in the range of 1:1.05 to 1:1.5, and the pH of the wastewater is adjusted to less than 2. The pH adjusted wastewater is cooled to a temperature in the range of 0 °C to 5 °C. The aniline or derivatives thereof, in the pH adjusted wastewater is diazotized by reacting with an alkali metal nitrite and hydrochloric acid, at a temperature in the range of 0 °C to 5 °C, to obtain a diazotized mixture comprising diazonium salt of aniline or derivatives thereof. The pH of the diazotized mixture is adjusted to greater than 7, to form phenoxide ions and stirred at a temperature in the range of 20 °C to 30 °C to obtain a product mixture comprising an azo compound, wherein the azo compound is 4-hydroxyazobenzene or derivatives thereof. The azo compound is separated from the product mixture to obtain a filtrate containing treated water, wherein the content of aniline or derivatives thereof, in the filtrate is less than 100 ppm and the content of phenol or derivatives thereof, in the filtrate is less than 200 ppm.

This aspect is reflected in claims 12-15 defining the scope of the present invention.

The process further comprises a step of adding activated charcoal to the filtrate to obtain the treated water comprising phenol or derivatives thereof and/or aniline or derivatives, in an amount less than 1 ppm, wherein the filtrate is treated with activated charcoal at a temperature in the range of 20 °C to 30 °C, for a time period in the range of 2 to 10 hours.

### DETAILED DESCRIPTION

Embodiments are provided so as to thoroughly and fully convey the scope of the present disclosure to the person skilled in the art. Numerous details are set forth, relating to specific components, and methods, to provide a complete understanding of embodiments of the present disclosure. It will be apparent to the person skilled in the art that the details provided in the embodiments should not be construed to limit the scope of the present disclosure. In some embodiments, well-known processes, well-known apparatus structures, and well-known techniques are not described in detail.

The scope of the invention is defined in the appended claims.

The terminology used, in the present disclosure, is only for the purpose of explaining a particular embodiment and such terminology shall not be considered to limit the scope of the present disclosure. As used in the present disclosure, the forms "a," "an," and "the" may be intended to include the plural forms as well, unless the context clearly suggests otherwise. The use of the expression "at least" or "at least one" suggests the use of one or more elements or ingredients or quantities, as the use may be in the embodiment of the disclosure to achieve one or more of the desired objects or results. The terms "comprises," "comprising," "including," and "having," are open ended transitional phrases and therefore specify the presence of stated features, integers, steps, operations, elements, modules, units and/or components, but do not forbid the presence or addition of one or more other features, integers, steps, operations, elements, components, and/or groups thereof. The particular order of steps disclosed in the method and process of the present disclosure is not to be construed as necessarily requiring their performance as described or illustrated. It is also to be understood that additional or alternative steps may be employed. Wastewater effluent is generated by chemical industries during synthesis and purification operations. Such effluent is required to be appropriately treated as it might contain significant amounts of unreacted raw materials as contaminants that could be toxic to the environment. Unreacted phenol is mainly present in the effluent generated by polymer or resin industries which is highly corrosive in nature. Similarly, aniline is one of the main contaminants that is present in effluent wastewater generated by dye manufacturing industries, which is highly toxic to the human body and can have lethal effects if swallowed, inhaled or absorbed through skin.

The methods in the art, for removing phenol or aniline from the industrial wastewater include various physical, chemical and biological processes that eliminate the unreacted materials in the wastewater, either by recovery, or by decomposition/degradation. The methods such as photo-decomposition and biological treatment, lead to the degradation/decomposition of phenol/aniline resulting in no recovery, whereas the methods such as nano-filtration, electro-coagulation, adsorption that recover the unreacted material from wastewater, are either expensive, ineffective for huge amount of effluent water or else employ huge volumes of solvents/reagents.

One of the methods to remove phenol from wastewater includes the use of water-insoluble, polymeric diazonium salts. However, such diazonium salts are relatively expensive. Moreover, such process leads to the recovery of phenol/aniline as a polymeric azo dye, which may not have any commercial value.

The present disclosure provides a process for the treatment of wastewater comprising phenol or derivatives thereof and/or aniline or derivatives thereof. The process is simple, environment friendly and economical, which reduces the content of phenol or derivatives thereof and/or aniline or derivatives thereof, to ppm level, while recovering the phenol or derivatives thereof and/or aniline or derivatives thereof in the form of a commercially significant compound.

In one aspect, the present disclosure provides a process for treatment of wastewater containing phenol or derivatives thereof.

The process comprises a step of adjusting the pH of the wastewater to more than 9 to obtain phenoxide ions.

In accordance with the present disclosure, the pH is adjusted by adding an alkali selected from the group consisting of sodium hydroxide, potassium hydroxide, ammonium hydroxide, lithium hydroxide, sodium carbonate, sodium bicarbonate, potassium carbonate, potassium bicarbonate, and ammonium carbonate, to the waste water. In an embodiment, the alkali is sodium hydroxide.

In an embodiment, the alkali is added as an aqueous solution having a concentration in the range of 40 wt.% to 50 wt.%. In an exemplary embodiment, the concentration of the aqueous solution of the alkali is 48 wt.%.

The molar ratio of the phenol or derivatives thereof in the wastewater to the alkali is in the range of 1:1 to 1:2. In an exemplary embodiment, the molar ratio of the phenol in the wastewater to the alkali is 1:1.5.

The inventive process of treatment of wastewater is non-limiting on the amount of phenol or derivatives thereof and/or the amount of aniline or derivatives thereof present in the waste water. In an embodiment, the amount of phenol or derivatives thereof, in the waste water is in the range of 0.1 wt.% to 50 wt.%. In yet another embodiment, the amount of phenol or derivatives thereof in the waste water is more than 50 wt.%. In an exemplary embodiment, the amount of phenol or derivatives thereof, in the wastewater is 8.2 wt.%.

In an exemplary embodiment, the pH of the wastewater, comprising 8.2 wt.% of phenol, is adjusted to above 9, by adding 48 wt.% aqueous solution of sodium hydroxide.

In an embodiment, the process comprises predetermining the concentration of phenol or derivatives thereof in the wastewater, prior to step of pH adjustment.

In accordance with the present disclosure, the derivative of phenol is at least one selected from the group consisting of alkyl substituted phenol, aryl substituted phenol, heteroaryl substituted phenol, allyl substituted phenol, cycloalkyl substituted phenol and hetero atom substituted phenol.

In the next step, the pH adjusted wastewater is cooled to a temperature below 10 °C. The pH adjusted wastewater, containing phenoxide ions, is added to an aqueous slurry of diazonium salt of aniline or derivatives thereof, slowly under stirring, at a temperature below 10 °C, to obtain a reaction mixture. The pH of the reaction mixture is adjusted in the range of 5 to 7.5, and stirred at a temperature in the range of 20 °C to 30 °C to obtain a product mixture comprising an azo compound.

In an embodiment, the reaction mixture is stirred for a time period in the range of 4 hours to 6 hours. In an exemplary embodiment, the reaction mixture is stirred for 5 hours.

In an embodiment, the pH of the reaction mixture is adjusted to 7.5 and stirred at 25 °C for 5 hours.

In accordance with the present disclosure, the azo compound is 4-hydroxyazobenzene or derivatives thereof. In an exemplary embodiment, the azo compound is 4-hydroxyazobenzene.

The aqueous slurry of diazonium salt of aniline or derivatives thereof, is prepared by reacting aniline or derivatives thereof, in water with an alkali metal nitrite and hydrochloric acid at a temperature in the range of 0 °C to 5 °C, at a pH below 2.

The alkali metal nitrite is selected from the group consisting of sodium nitrite, potassium nitrite and lithium nitrite. In an embodiment, the alkali metal nitrite is sodium nitrite.

The alkali metal nitrite is added as an aqueous solution having a concentration of alkali metal nitrite in the range of 25 wt.% to 40 wt.%. In an exemplary embodiment, the concentration of the alkali metal nitrite is 30 wt.%.

The molar ratio of aniline or derivatives thereof, to the alkali metal nitrite is in the range of 1:0.9 to 1:1.5.

In an embodiment, the diazonium salt is benzenediazonium chloride.

In accordance with the present disclosure, the derivative of aniline is at least one selected from the group consisting of alkyl substituted aniline, aryl substituted aniline, heteroaryl substituted aniline, allyl substituted aniline, cycloalkyl substituted aniline and hetero atom substituted aniline.

In an exemplary embodiment, hydrochloric acid is added to aniline in water to adjust the pH below 2, and cooled to attain a temperature in the 0 °C to 5 °C, followed by slow addition of aqueous solution of sodium nitrite at a temperature range of 0 °C to 5 °C, and further stirring to obtain benzenediazonium chloride.

The mixing of phenoxide ion in the pH adjusted wastewater with diazonium salt of aniline, leads to a resultant pH less than 5, which is adjusted to a pH range of 5 to 7.5, by the addition of base.

In the next step, the azo compound is separated from the product mixture to obtain a filtrate containing treated water, wherein the content of phenol or derivatives thereof, in the treated water is less than 200 ppm.

The separation of the azo compound is carried out by filtration or centrifugation. In an embodiment, the separation of the azo compound is carried out by filtration.

In accordance with the present disclosure, the azo compound formed is recovered and purified.

In an embodiment, the azo compound is 4-hydroxyazobenzene, which is recovered and purified to obtain a commercially valuable solvent dye.

In an exemplary embodiment, the pH of the wastewater, comprising 8 wt.% of phenol, is adjusted to more than 9. The pH adjusted wastewater is cooled to 0 °C to 5 °C. The pH adjusted wastewater, containing phenoxide ions, is added to an aqueous slurry of benzenediazonium chloride, slowly under stirring, at a temperature below 10 °C, to obtain a reaction mixture. The pH of the reaction mixture is adjusted to 7.5, and stirred at 25 °C for 5 hours to obtain a product mixture comprising 4-hydroxyazobenzene. The 4-hydroxyazobenzene is separated from the product mixture by filtration to obtain a filtrate containing treated water, wherein the content of phenol or derivatives thereof, in the filtrate is 163 ppm.

The filtrate is treated with any one selected from the group consisting of activated charcoal, bentonite, silica, graphene, graphene oxide and lignite coal, to reduce the amount of phenol or derivatives thereof, to less than 1 ppm.

In an embodiment, the process comprises a step of adding activated charcoal to the filtrate to obtain water comprising phenol or derivatives thereof, in an amount less than 1 ppm. In an embodiment, the amount of phenol or derivatives thereof in the filtrate, after charcoal treatment, is negligible.

In an embodiment, the filtrate is treated with activated charcoal at a temperature in the range of 20 °C to 30 °C, for a time period in the range of 2 to 10 hours, to obtain water comprising phenol, in an amount less than 1 ppm. In an embodiment, the filtrate is treated with activated charcoal at 25 °C for 5 hours.

In an exemplary embodiment, the filtrate containing treated water comprising 163 ppm of phenol, is treated with activated charcoal at 25 °C, for 5 hours, to obtain a resultant mixture which is filtered through celite bed, to obtain the treated water which is colorless and comprises less than 1 ppm of phenol or derivatives thereof.

In another aspect, the present disclosure provides a process for treatment of wastewater containing aniline or derivatives thereof.

The process comprises a step of adjusting the pH of the wastewater to less than 2.

The pH of the wastewater is adjusted, by adding concentrated hydrochloric acid having concentration in the range of 30% to 40%. In an exemplary embodiment, the concentration of hydrochloric acid is 35%.

The amount of aniline or derivatives thereof, in the waste water is at least 0.1 wt.%. In an embodiment, the amount of aniline or derivatives thereof, in the wastewater is in the range of 0.1 wt.% to 50 wt.%. In yet another embodiment, the amount of aniline or derivatives thereof in the waste water is more than 50 wt.%. In an exemplary embodiment, the amount of aniline or derivatives thereof, in the waste water is 8 wt.%.

In an exemplary embodiment, the pH of the wastewater, comprising 8 wt.% of aniline, is adjusted to below 2, by adding 35% concentrated hydrochloric acid.

In an embodiment, the process comprises predetermining the concentration of aniline or derivatives thereof in the wastewater, prior to step of pH adjustment.

In the next step, the pH adjusted wastewater is cooled to a temperature in the range of 0 °C to 5 °C. The aniline or derivatives thereof, in the pH adjusted wastewater, is diazotized by reacting with an alkali metal nitrite and hydrochloric acid, at a temperature in the range of 0 °C to 5 °C, to obtain a diazonium salt of aniline or derivatives thereof.

The step of diazotization is carried out by adding alkali metal nitrite to the pH adjusted wastewater, slowly under stirring, at a temperature in the range of 0 °C to 5 °C for a time period in the range of 20 minutes to 40 minutes, which is further stirred for a time period in the range of 10 minutes to 30 minutes. In an embodiment, the addition of alkali metal nitrite is done at 0 °C to 5 °C over a period of 30 minutes, which is further stirred for a time period of 20 minutes.

The step of pH adjustment and cooling is essential to enable the formation of diazonium salt. The alkali metal nitrite reacts with the hydrochloric acid which is added for pH adjustment and leads to the in-situ generation of nitrous acid that further leads to formation of nitrosonium cation (NO⁺) that reacts with the nucleophilic amino group of the aniline.

In an embodiment, the diazonium salt is benzenediazonium chloride.

The alkali metal nitrite is selected from the group consisting of sodium nitrite, potassium nitrite and lithium nitrite. In an embodiment, the alkali metal nitrite is sodium nitrite.

The alkali metal nitrite is added as an aqueous solution having a concentration of alkali metal nitrite in the range of 25 wt.% to 40 wt.%. In an exemplary embodiment, the concentration of the alkali metal nitrite is 30 wt.%.

The molar ratio of aniline or derivatives thereof, in the pH adjusted wastewater to the alkali metal nitrite is in the range of 1:1 to 1:1.5. In an exemplary embodiment, the molar ratio of aniline or derivatives thereof, to alkali metal nitrite is 1:1.1.

The molar ratio of aniline or derivatives thereof, in the pH adjusted wastewater to the hydrochloric acid is in the range of 1:2.5 to 1:3.5. In an exemplary embodiment, the molar ratio of aniline or derivatives thereof, to hydrochloric acid is 1:3.

In the next step, the phenoxide ions are added to the diazonium salt of aniline or derivatives thereof, slowly under stirring, at a temperature below 10 °C, to obtain a reaction mixture. The pH of the reaction mixture is adjusted in the range of 5 to 7.5, and stirred at a temperature in the range of 20 °C to 30 °C to obtain a product mixture comprising an azo compound.

In an embodiment, the reaction mixture is stirred for a time period in the range of 3 hours to 6 hours. In an exemplary embodiment, the reaction mixture is stirred for 5 hours.

In accordance with the present disclosure, the azo compound is 4-hydroxyazobenzene or derivatives thereof. In an exemplary embodiment, the azo compound is 4-hydroxyazobenzene.

The phenoxide ions are prepared by adding a base to an aqueous solution of phenol or derivatives thereof, to attain pH in the range of 10 to 12.

The base is selected from the group consisting of sodium hydroxide, potassium hydroxide, ammonium hydroxide, lithium hydroxide, sodium carbonate, sodium bicarbonate, potassium carbonate, potassium bicarbonate, and ammonium carbonate. In an embodiment, the base is sodium hydroxide.

The base is added as an aqueous solution having a concentration in the range of 40 wt.% to 50 wt.%. In an embodiment, the concentration of aqueous base solution is 48 wt.%.

The aqueous solution of phenol or derivatives thereof has a concentration of phenol or derivatives thereof, in the range of 7 wt.% to 10 wt.%. In an embodiment, the aqueous solution of phenol or derivatives thereof has a concentration of 8.5 wt.%.

The addition of the base to phenol in water leads to the generation of phenoxide ions which act as an effective nucleophile for the reaction with the diazonium salt of aniline.

The molar ratio of aniline or derivatives thereof, in the wastewater and phenol is in the range of 1:0.8 to 1:1. In an embodiment, the molar ratio of aniline, in the wastewater, to phenol is 1:0.9.

In the next step, the azo compound is separated from the product mixture to obtain a filtrate containing treated water, wherein the content of aniline or derivatives thereof, in the filtrate is less than 100 ppm.

The separation of the azo compound is carried out by filtration or centrifugation. In an embodiment, the separation of the azo compound is carried out by filtration.

In accordance with the present disclosure, the azo compound is recovered and purified.

In an embodiment, the azo compound is 4-hydroxyazobenzene, which is recovered and purified to obtain a commercially valuable solvent dye.

In an exemplary embodiment, the pH of the wastewater comprising aniline is adjusted to less than 2. The pH adjusted wastewater is cooled to 0 °C to 5 °C. The aniline in the pH adjusted wastewater is diazotized at 0 °C to 5 °C, to obtain benzenediazonium chloride. Phenoxide ions are added to the diazonium salt of aniline, slowly under stirring, at a temperature below 10 °C, to obtain a reaction mixture. The pH of the reaction mixture is adjusted to 7 to 7.5, and stirred at 25 °C to obtain a product mixture comprising 4-hydroxyazobenzene. The 4-hydroxyazobenzene is separated from the product mixture to obtain a filtrate containing treated water, wherein the content of aniline or derivatives thereof, in the filtrate is less than 100 ppm.

The filtrate is treated with any one material selected from the group consisting of activated charcoal, bentonite, silica, graphene, graphene oxide and ignite coal, to reduce the amount of aniline or derivatives thereof, to less than 1 ppm.

In an embodiment, the process comprises a step of adding activated charcoal to the filtrate to obtain the treated water comprising aniline or derivatives thereof, in an amount less than 1 ppm. In an embodiment, the amount of aniline or derivatives thereof in the filtrate, after charcoal treatment, is negligible.

In an embodiment, the filtrate is treated with activated charcoal at a temperature in the range of 20 °C to 30 °C, for a time period in the range of 2 to 10 hours, to obtain the treated water comprising aniline or derivatives thereof, in an amount less than 1 ppm. In an embodiment, the filtrate is treated with the activated charcoal at 25 °C for 5 hours.

In an exemplary embodiment, the filtrate is treated with activated charcoal at 25 °C, for 5 hours, to obtain a resultant mixture which is filtered through celite bed, to obtain the treated water which is colorless and comprises less than 1 ppm of aniline or derivatives thereof.

In accordance with the present disclosure, the derivative of phenol is at least one selected from the group consisting of alkyl substituted phenol, aryl substituted phenol, heteroaryl substituted phenol, allyl substituted phenol, cycloalkyl substituted phenol and hetero atom substituted phenol.

In accordance with the present disclosure, the derivative of aniline is at least one selected from the group consisting of alkyl substituted aniline, aryl substituted aniline, heteroaryl substituted aniline, allyl substituted aniline, cycloalkyl substituted aniline and hetero atom substituted aniline.

In yet another aspect, the present disclosure provides a process for treatment of wastewater containing a combination of aniline or derivatives thereof and phenol or derivatives thereof. The process comprises a step of predetermining the concentration of aniline or derivatives thereof and phenol or derivatives thereof, in the wastewater. The molar ratio of phenol or derivatives thereof to aniline or derivatives thereof, in the waste water, is adjusted in the range of 1:1.05 to 1:1.5, and the pH of the wastewater is adjusted to less than 2. The pH adjusted wastewater is cooled to a temperature in the range of 0 °C to 5 °C. The aniline or derivatives thereof, in the pH adjusted wastewater is diazotized by reacting with an alkali metal nitrite and hydrochloric acid, at a temperature in the range of 0 °C to 5 °C, to obtain a diazotized mixture comprising a diazonium salt of aniline or derivatives thereof. The pH of the diazotized mixture is adjusted to greater than 7, to form phenoxide ions at 0 °C to 5 °C, and stirred at a temperature in the range of 20 °C to 30 °C to obtain a product mixture comprising an azo compound. The azo compound is separated from the product mixture to obtain a filtrate containing treated water, wherein the content of aniline or derivatives thereof, is less than 100 ppm and the content of phenol or derivatives thereof, is less than 200 ppm.

In accordance with the present disclosure, the azo compound is 4-hydroxyazobenzene or derivatives thereof. In an exemplary embodiment, the azo compound is 4-hydroxyazobenzene.

In accordance with the present disclosure, the derivative of phenol is at least one selected from the group consisting of alkyl substituted phenol, aryl substituted phenol, heteroaryl substituted phenol, allyl substituted phenol, cycloalkyl substituted phenol and hetero atom substituted phenol.

In accordance with the present disclosure, the derivative of aniline is at least one selected from the group consisting of alkyl substituted aniline, aryl substituted aniline, heteroaryl substituted aniline, allyl substituted aniline, cycloalkyl substituted aniline and hetero atom substituted aniline.

In an embodiment, the process comprises predetermining the concentration of phenol or derivatives thereof and/or aniline or derivatives thereof in the wastewater, prior to step of pH adjustment.

The amount of phenol or derivatives thereof and aniline or derivatives thereof, in the waste water is independently at least 0.1 wt.%.

In an embodiment, the amount of phenol or derivatives thereof and aniline or derivatives thereof in the wastewater is independently in the range of 0.1 wt.% to 50 wt.%.

The molar ratio of phenol or derivatives thereof to aniline or derivatives thereof, in the wastewater is adjusted in the range of 1:1.05 to 1:1.5, by external addition of phenol or derivatives thereof to aniline or derivatives thereof.

In an exemplary embodiment, the wastewater comprises phenol and aniline, and the molar ratio of phenol to aniline, in the waste water is adjusted to 1:1.1, prior to step of pH adjustment, by external addition of phenol and/or aniline.

The alkali metal nitrite is selected from the group consisting of sodium nitrite, potassium nitrite and lithium nitrite. In an embodiment, the alkali metal nitrite is sodium nitrite.

The alkali metal nitrite is added as an aqueous solution having a concentration of alkali metal nitrite in the range of 25 wt.% to 40 wt.%. In an exemplary embodiment, the concentration of the alkali metal nitrite is 30 wt.%.

The separation of the azo compound is carried out by filtration or centrifugation. In an embodiment, the separation of the azo compound is carried out by filtration.

In accordance with the present disclosure, the azo compound is recovered and purified.

In an embodiment, the azo compound is 4-hydroxyazobenzene, which is recovered and purified to obtain a commercially valuable solvent dye.

The filtrate is treated with any one selected from the group consisting of activated charcoal, bentonite, silica, graphene, graphene oxide and ignite coal, to reduce the amount of phenol or derivatives thereof and aniline or derivatives thereof, to less than 1 ppm.

In an embodiment, the process comprises a step of adding an activated charcoal to the filtrate to obtain the treated water comprising phenol or derivatives thereof and aniline or derivatives thereof, in an amount less than 1 ppm.

The filtrate is treated with the activated charcoal at a temperature in the range of 20 °C to 30 °C, for a time period in the range of 2 to 10 hours. In an embodiment, the filtrate is treated with the activated charcoal at 25 °C for 5 hours.

In an exemplary embodiment, the filtrate is treated with activated charcoal at 25 °C, for 5 hours, to obtain a resultant mixture which is filtered through celite bed, to obtain the treated water which is colorless and comprises less than 1 ppm of phenol or derivatives thereof and aniline or derivatives thereof.

The overall process of the present disclosure is represented as follows: 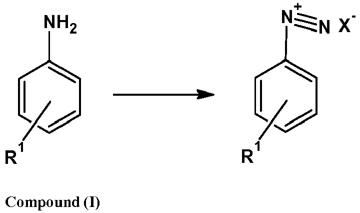 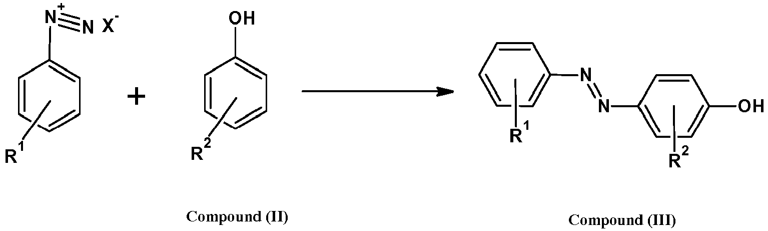 wherein compound (I) is aniline or derivatives thereof; wherein compound (II) is phenol or derivatives thereof;
wherein R¹ and R² are independently selected from the group consisting of hydrogen, alkyl, aryl, hetero aryl, allyl, cyclo alkyl, hetero cycle and hetero atoms, wherein X is CI. When R¹= R²= H , the product (azocompound) (III) is 4-Hydroxyazobenzene.

The present disclosure thus provides a simple, economical and environment friendly process for the treatment of wastewater comprising phenol or derivatives thereof and/or aniline or derivatives thereof. The process is effective in reducing the amount of phenol or derivatives thereof and/or aniline or derivatives to a final value less than 1 ppm or negligible. The process uses inexpensive reagents and also enables to remove aniline or phenol by converting it to azo compounds such as 4-hydroxyazobenzene, which is a commercial dye compound.

The present disclosure is further described in light of the following examples which is set forth for illustration purpose only and not to be construed for limiting the scope of the disclosure. These examples can be scaled up to industrial/commercial scale and the results obtained can be extrapolated to industrial/commercial scale.

### EXAMPLES

### Example 1: Process for treatment of wastewater comprising phenol

### Step 1: Preparation of phenoxide ions in water

Wastewater containing phenol as a contaminant was obtained. The content of phenol in the wastewater sample was found to be 8.2 wt.%, as determined by HPLC. 100 g of the wastewater containing phenol was taken in a reaction vessel. To the wastewater, 48% aqueous solution of sodium hydroxide (11 g) was added to adjust the pH to 11. The pH adjusted wastewater was cooled to 0 °C to 5 °C.

Preparation of benzene diazonium chloride:
Concentrated hydrochloric acid (35%) (30 g) was added to water (50 g), to attain pH below 2, to which aniline (8.93 g) was slowly added to obtain a mixture. The mixture was cooled to 0 °C to 5 °C, followed by the slow addition of 30% sodium nitrite solution (7.27 g NaNO₂ in 17.0 g water), at 0 °C to 5 °C for 10 minutes, maintaining pH <2. The completion of the reaction was tested by using starch iodide paper. The resultant mixture so obtained was stirred at 0 °C - 5 °C for 20 minutes.

### Step 2: Reaction of phenoxide ions with benzene diazonium chloride

The pH adjusted wastewater (containing phenoxide ions, as prepared in step 1) was reacted with benzenediazonium chloride, slowly under stirring, at 0 °C to 5 °C, to obtain a reaction mixture. After complete addition, pH of the reaction mixture was adjusted to 7.5, and the reaction mixture was stirred at 25 °C for 5 hours to obtain a product mixture comprising 4-hydroxyazobenzene. The compound 4-hydroxyazobenzene was separated by filtration to obtain a dark yellow colour filtrate containing treated water comprising 163 ppm of phenol. 16.2 g of 4-hydroxyazobenzene was obtained.

The filtrate (182 g) was treated with activated charcoal (5 g) at 25 °C, for 5 hours, to obtain a resultant mixture which was filtered through celite bed, to obtain treated water which was colorless and comprises less than 1 ppm of phenol (or negligible).

### Example 2: Process for treatment of wastewater comprising aniline:

### Step 1: Diazotization of aniline in wastewater

Wastewater containing aniline as a contaminant was obtained. The content of aniline in the wastewater sample was found to be 8 wt.%, as determined by HPLC. 100 g of the wastewater containing aniline was taken in a reaction vessel. To the wastewater, concentrated HCI (35%) (27 g) was added to adjust the pH to <2 (0.8). The pH adjusted wastewater was cooled to 0 °C to 5 °C. The aniline in the pH adjusted wastewater was diazotized by slow addition of an aqueous solution of sodium nitrite (6.51 g in 15 g water) (30 wt.% solution) at 0 °C to 5 °C for a period of 30 minutes maintaining pH <2, followed by stirring for 20 minutes at 0 °C to 5 °C, to obtain diazonium salt of aniline (benzenediazonium chloride). The completion of reaction was tested by starch iodide paper.

### Step 2: Reaction of diazonium salt with phenoxide ions

Phenoxide ions were prepared by adding 48% aqueous solution of sodium hydroxide (9.7 g) to a mixture of phenol (7.26 g in 92.7 g water, till a pH of 11 was obtained. The phenoxide ions were reacted with benzenediazonium chloride (obtained in Step 1) by adding the phenoxide ions slowly, under stirring, to the benzenediazonium chloride in the wastewater, at 0 °C to 5 °C, to obtain a reaction mixture. The pH of the reaction mixture was adjusted to 7.5 by addition of 48% caustic and the reaction mixture was further stirred at 25 °C for 5 hours to obtain a product mixture comprising 4-hydroxyazobenzene. The compound 4-hydroxyazobenzene was separated by filtration to obtain a dark yellow filtrate containing water containing less than 10 ppm of aniline.

The filtrate (202 g) was treated with activated charcoal (5 g) at 25 °C, for 5 hours, to obtain a resultant mixture which was filtered using celite bed, to obtain colorless water comprising less than 1 ppm of aniline or negligible. 14.7 g of 4-hydroxyazobenzene was obtained.

Example 3: Process for treatment of wastewater comprising phenol and Aniline Wastewater comprising phenol and aniline as a contaminant was obtained. The content of phenol in the wastewater sample was found to be 3.63 wt.% and the content of aniline was found to be 4 wt.%, as determined by HPLC. 100 g of the wastewater comprising the phenol and aniline was taken in a reaction vessel. To the wastewater, concentrated hydrochloric acid (35%) (13.43 g) was added, to attain pH below 2. The mixture was cooled to 0 °C to 5 °C, followed by the slow addition of 30% sodium nitrite solution (3.26 g NaNO₂ in 7.61 g water), at 0 °C to 5 °C for 15 minutes maintaining pH <2, to obtain a resultant mixture, and the completion of the reaction was tested by using starch iodide paper. The resultant mixture was stirred at 0 °C to 5 °C for 20 minutes to obtain a diazotized mixture comprising benzenediazonium chloride.

The pH of the diazotized mixture was adjusted to 7.5 by adding 48% caustic lye solution (4.82 g) at 0 °C to 5 °C and the resulting mixture was stirred at 25 °C for 5 hours to obtain a product mixture comprising 4-hydroxyazobenzene. The compound 4-hydroxyazobenzene was separated by filtration to obtain a dark yellow colour filtrate containing water comprising 173 ppm of phenol and 23 ppm aniline. 7.36 gm of 4-hydroxyazobenzene was obtained.

The coloured filtrate 109 g was treated with activated charcoal (2.5 g) at 25 °C, for 5 hours, to obtain a resultant mixture which was filtered through celite bed, to obtain treated water which was colourless and comprises less than 1 ppm of phenol and less than1 ppm of aniline or negligible.

The Examples illustrate that the inventive process is effective in reducing the amount of aniline or phenol or any derivatives thereof to a final value of less than 1 ppm. The process employs inexpensive reagents to convert waste aniline or phenol to 4-hydroxyazobenzene, which is a commercially significant dye.

## Claims

1. A process for treatment of wastewater containing phenol or derivatives thereof, said process comprising the following steps:
(i) adjusting the pH of the wastewater to more than 9 to obtain phenoxide ions;
(ii) cooling the pH adjusted wastewater to a temperature below 10 °C;
(iii) adding the pH adjusted wastewater containing the phenoxide ions, to an aqueous slurry of diazonium salt of aniline or derivatives thereof, slowly under stirring, at a temperature below 10 °C, to obtain a reaction mixture; wherein the aqueous slurry of diazonium salt of aniline or derivatives thereof, is prepared by reacting aniline or derivatives thereof, in water with an alkali metal nitrite and hydrochloric acid at a temperature in the range of 0 °C to 5 °C at a pH below 2;
(iv) adjusting the pH of the reaction mixture in the range of 5 to 7.5, and stirring at a temperature in the range of 20 °C to 30 °C to obtain a product mixture comprising an azo compound, wherein the azo compound is 4-hydroxyazobenzene or derivatives thereof; and
(v) separating the azo compound from the product mixture to obtain a filtrate containing treated water, wherein the content of phenol or derivatives thereof, in the filtrate is less than 200 ppm.

2. The process as claimed in claim 1, wherein the amount of phenol or derivatives thereof, in the waste water is in the range of 0.1 wt.% to 50 wt.%.

3. The process as claimed in claim 1, wherein in step (i), the pH is adjusted by adding an alkali selected from the group consisting of sodium hydroxide, potassium hydroxide, ammonium hydroxide, lithium hydroxide, sodium carbonate, sodium bicarbonate, potassium carbonate, potassium bicarbonate, and ammonium carbonate, to the waste water, wherein the alkali is added as an aqueous solution having a concentration in the range of 40 wt.% to 50 wt.%.

4. The process as claimed in claim 1, wherein said alkali metal nitrite is selected from the group consisting of sodium nitrite, potassium nitrite and lithium nitrite.

5. The process as claimed in claim 4, wherein the alkali metal nitrite is added as an aqueous solution having a concentration of alkali metal nitrite in the range of 25 wt.% to 40 wt.%, or wherein the molar ratio of aniline or derivatives thereof, to the alkali metal nitrite is in the range of 1:0.9 to 1:1.5.

6. The process as claimed in claim 1, wherein the separation is carried out by filtration or centrifugation, and wherein the azo compound is recovered and purified.

7. A process for treatment of wastewater containing aniline or derivatives thereof, said process comprising the following steps:
(i) adjusting pH of the wastewater to less than 2;
(ii) cooling the pH adjusted wastewater to a temperature in the range of 0 °C to 5 °C;
(iii) diazotizing the aniline or derivatives thereof, in the pH adjusted wastewater, by reacting with an alkali metal nitrite and hydrochloric acid, at a temperature in the range of 0 °C to 5 °C, to obtain a diazonium salt of aniline or derivatives thereof;
(iv) adding phenoxide ions to the diazonium salt of aniline or derivatives thereof, slowly under stirring, at a temperature below 10 °C, to obtain a reaction mixture; wherein the phenoxide ions are prepared by adding a base to an aqueous solution of phenol or derivatives thereof, to attain a pH in the range of 10 to 12;
(v) adjusting the pH of the reaction mixture in the range of 5 to 7.5, and stirring at a temperature in the range of 20 °C to 30 °C to obtain a product mixture comprising an azo compound, wherein the azo compound is 4-hydroxyazobenzene or derivatives thereof; and
(vi) separating the azo compound from the product mixture to obtain a filtrate containing treated water, wherein the content of aniline or derivatives thereof, in the filtrate is less than 100 ppm.

8. The process as claimed in claim 7, wherein the amount of aniline or derivatives thereof, in the waste water is in the range of 0.1 wt.% to 50 wt.%.

9. The process as claimed in claim 7, wherein in step (i), the pH of the wastewater is adjusted, by adding the concentrated hydrochloric acid having concentration in the range of 30% to 40%, or wherein the molar ratio of aniline or derivatives thereof, to hydrochloric acid is in the range of 1:2.5 to 1:3.5.

10. The process as claimed in claim 7, wherein said base is selected from the group consisting of sodium hydroxide, potassium hydroxide, ammonium hydroxide, lithium hydroxide, sodium carbonate, sodium bicarbonate, potassium carbonate, potassium bicarbonate, and ammonium carbonate.

11. The process as claimed in any of the preceding claims, wherein the process comprises predetermining the concentration of phenol or derivatives thereof, or aniline or derivatives thereof, in the wastewater, prior to step (i) of pH adjustment.

12. A process for treatment of wastewater containing a combination of aniline or derivatives thereof and phenol or derivatives thereof, said process comprising the following steps:
(i) pre-determining the concentration of aniline or derivatives thereof and phenol or derivatives thereof, in the wastewater;
(ii) adjusting the molar ratio of phenol or derivatives thereof to aniline or derivatives thereof, in the waste water, in the range of 1:1.05 to 1:1.5 and adjusting pH of the wastewater to less than 2;
(iii) cooling the pH adjusted wastewater to a temperature in the range of 0 °C to 5 °C;
(iv) diazotizing the aniline or derivatives thereof, in the pH adjusted wastewater by reacting with an alkali metal nitrite and hydrochloric acid, at a temperature in the range of 0 °C to 5 °C, to obtain a diazotized mixture comprising diazonium salt of aniline or derivatives thereof;
(v) adjusting the pH of the diazotized mixture to greater than 7, to form phenoxide ions and stirring at a temperature in the range of 20 °C to 30 °C to obtain a product mixture comprising an azo compound, wherein the azo compound is 4-hydroxyazobenzene or derivatives thereof; and
(vi) separating the azo compound from the product mixture to obtain a filtrate containing treated water, wherein the content of aniline or derivatives thereof, in the filtrate is less than 100 ppm and the content of phenol or derivatives thereof, in the filtrate is less than 200 ppm.

13. The process as claimed in claim 12, wherein step (ii) of adjusting the molar ratio of phenol or derivatives thereof to aniline or derivatives thereof, in the waste water, is done by external addition of the phenol or derivatives thereof and/or the aniline or derivatives thereof.

14. The process as claimed in any of the preceding claims, wherein the process further comprises a step of adding activated charcoal to the filtrate to obtain the treated water comprising phenol or derivatives thereof and/or aniline or derivatives, in an amount less than 1 ppm or negligible, wherein the filtrate is treated with activated charcoal at a temperature in the range of 20 °C to 30 °C, for a time period in the range of 2 to 10 hours.

15. The process as claimed in any of the preceding claims, wherein the derivative of phenol is at least one selected from the group consisting alkyl substituted phenol, aryl substituted phenol, heteroaryl substituted phenol, allyl substituted phenol, cycloalkyl substituted phenol and hetero atom substituted phenol, or wherein the derivative of aniline is at least one selected from the group consisting of alkyl substituted aniline, aryl substituted aniline, heteroaryl substituted aniline, allyl substituted aniline, cycloalkyl substituted aniline and hetero atom substituted aniline.

## Patentansprüche

1. Verfahren zur Behandlung von Abwasser, das Phenol oder Derivate davon enthält, wobei das Verfahren die folgenden Schritte umfasst:
(i) Einstellen des pH des Abwassers auf mehr als 9, um Phenoxidionen zu erhalten;
(ii) Abkühlen des pH-eingestellten Abwassers auf eine Temperatur unter 10 °C;
(iii) Zugeben des pH-angepassten Abwassers, das die Phenoxidionen enthält, zu einer wässrigen Aufschlämmung von Diazoniumsalz von Anilin oder Derivaten davon, langsam unter Rühren, bei einer Temperatur unter 10 °C, um ein Reaktionsgemisch zu erhalten; wobei die wässrige Aufschlämmung von Diazoniumsalz von Anilin oder Derivaten davon durch Umsetzen von Anilin oder Derivaten davon in Wasser mit einem Alkalimetallnitrit und Chlorwasserstoffsäure bei einer Temperatur im Bereich von 0 °C bis 5 °C bei einem pH unter 2 hergestellt wird;
(iv) Einstellen des pH des Reaktionsgemischs in den Bereich von 5 bis 7,5 und Rühren bei einer Temperatur im Bereich von 20 °C bis 30 °C, um ein Produktgemisch umfassend eine Azoverbindung zu erhalten, wobei die Azoverbindung 4-Hydroxyazobenzol oder Derivate davon ist; und
(v) Abtrennen der Azoverbindung aus dem Produktgemisch, um ein Filtrat enthaltend behandeltes Wasser zu erhalten, wobei der Gehalt an Phenol oder Derivaten davon im Filtrat weniger als 200 ppm beträgt.

2. Verfahren nach Anspruch 1, wobei die Menge an Phenol oder Derivaten davon im Abwasser im Bereich von 0,1 Gew.-% bis 50 Gew.-% liegt.

3. Verfahren nach Anspruch 1, wobei in Schritt (i) der pH durch Zugeben eines Alkalis, ausgewählt aus der Gruppe bestehend aus Natriumhydroxid, Kaliumhydroxid, Ammoniumhydroxid, Lithiumhydroxid, Natriumcarbonat, Natriumbicarbonat, Kaliumcarbonat, Kaliumbicarbonat und Ammoniumcarbonat, zum Abwasser eingestellt wird, wobei das Alkali als eine wässrige Lösung mit einer Konzentration im Bereich von 40 Gew.-% bis 50 Gew.-% zugegeben wird.

4. Verfahren nach Anspruch 1, wobei das Alkalimetallnitrit ausgewählt ist aus der Gruppe bestehend aus Natriumnitrit, Kaliumnitrit und Lithiumnitrit.

5. Verfahren nach Anspruch 4, wobei das Alkalimetallnitrit als eine wässrige Lösung mit einer Konzentration an Alkalimetallnitrit im Bereich von 25 Gew.-% bis 40 Gew.-% zugegeben wird, oder wobei das Molverhältnis von Anilin oder Derivaten davon zu dem Alkalimetallnitrit im Bereich von 1:0,9 bis 1:1,5 liegt.

6. Verfahren nach Anspruch 1, wobei die Abtrennung durch Filtration oder Zentrifugation durchgeführt wird und wobei die Azoverbindung zurückgewonnen und aufgereinigt wird.

7. Verfahren zur Behandlung von Abwasser, das Anilin oder Derivate davon enthält, wobei das Verfahren die folgenden Schritte umfasst:
(i) Einstellen des pH des Abwassers auf weniger als 2;
(ii) Abkühlen des pH-eingestellten Abwassers auf eine Temperatur im Bereich von 0 °C bis 5 °C;
(iii) Diazotieren des Anilins oder Derivaten davon im pH-eingestellten Abwasser durch Umsetzen mit einem Alkalimetallnitrit und Chlorwasserstoffsäure bei einer Temperatur im Bereich von 0 °C bis 5 °C, um ein Diazoniumsalz des Anilins oder Derivaten davon zu erhalten;
(iv) Zugeben von Phenoxidionen zu dem Diazoniumsalz von Anilin oder Derivaten davon, langsam unter Rühren, bei einer Temperatur unter 10 °C, um ein Reaktionsgemisch zu erhalten; wobei die Phenoxidionen durch Zugeben einer Base zu einer wässrigen Lösung von Phenol oder Derivaten davon hergestellt werden, um einen pH im Bereich von 10 bis 12 zu erlangen;
(v) Einstellen des pH des Reaktionsgemischs in den Bereich von 5 bis 7,5 und Rühren bei einer Temperatur im Bereich von 20 °C bis 30 °C, um ein Produktgemisch zu erhalten umfassend eine Azoverbindung, wobei die Azoverbindung 4-Hydroxyazobenzol oder Derivate davon ist; und
(vi) Abtrennen der Azoverbindung aus dem Produktgemisch, um ein Filtrat enthaltend behandeltes Wasser zu erhalten, wobei der Gehalt an Anilin oder Derivaten davon im Filtrat weniger als 100 ppm beträgt.

8. Verfahren nach Anspruch 7, wobei die Menge an Anilin oder Derivaten davon im Abwasser im Bereich von 0,1 Gew.-% bis 50 Gew.-% liegt.

9. Verfahren nach Anspruch 7, wobei in Schritt (i) der pH des Abwassers durch Zugeben von konzentrierter Chlorwasserstoffsäure mit einer Konzentration im Bereich von 30 % bis 40 % eingestellt wird, oder wobei das molare Verhältnis von Anilin oder Derivaten davon zu Chlorwasserstoffsäure im Bereich von 1:2,5 bis 1:3,5 liegt.

10. Verfahren nach Anspruch 7, wobei die Base ausgewählt ist aus der Gruppe bestehend aus Natriumhydroxid, Kaliumhydroxid, Ammoniumhydroxid, Lithiumhydroxid, Natriumcarbonat, Natriumbicarbonat, Kaliumcarbonat, Kaliumbicarbonat und Ammoniumcarbonat.

11. Verfahren nach einem beliebigen der vorhergehenden Ansprüche, wobei das Verfahren die Vorbestimmung der Konzentration von Phenol oder Derivaten davon oder Anilin oder Derivaten davon im Abwasser vor Schritt (i) der pH-Einstellung umfasst.

12. Verfahren zur Behandlung von Abwasser, das eine Kombination von Anilin oder Derivaten davon und Phenol oder Derivaten davon enthält, wobei das Verfahren die folgenden Schritte umfasst:
(i) Vorbestimmen der Konzentration von Anilin oder Derivaten davon und Phenol oder Derivaten davon im Abwasser;
(ii) Einstellen des molaren Verhältnisses von Phenol oder Derivaten davon zu Anilin oder Derivaten davon im Abwasser im Bereich von 1:1,05 bis 1:1,5 und Einstellen des pH des Abwassers auf weniger als 2;
(iii) Abkühlen des pH-eingestellten Abwassers auf eine Temperatur im Bereich von 0 °C bis 5 °C;
(iv) Diazotieren des Anilins oder Derivaten davon in dem pH-eingestellten Abwasser durch Umsetzen mit einem Alkalimetallnitrit und Chlorwasserstoffsäure bei einer Temperatur im Bereich von 0 °C bis 5 °C, um ein diazotiertes Gemisch zu erhalten, umfassend Diazoniumsalz von Anilin oder Derivaten davon;
(v) Einstellen des pH des diazotierten Gemischs auf mehr als 7, um Phenoxidionen zu bilden, und Rühren bei einer Temperatur im Bereich von 20 °C bis 30 °C, um ein Produktgemisch umfassend eine Azoverbindung zu erhalten, wobei die Azoverbindung 4-Hydroxyazobenzol oder Derivate davon ist; und
(vi) Abtrennen der Azoverbindung aus dem Produktgemisch, um ein Filtrat enthaltend behandeltes Wasser zu erhalten, wobei der Gehalt an Anilin oder Derivaten davon im Filtrat weniger als 100 ppm und der Gehalt an Phenol oder Derivaten davon im Filtrat weniger als 200 ppm beträgt.

13. Verfahren nach Anspruch 12, wobei Schritt (ii) des Einstellens des molaren Verhältnisses von Phenol oder Derivaten davon zu Anilin oder Derivaten davon im Abwasser durch externe Zugabe des Phenols oder Derivaten davon und/oder des Anilins oder Derivaten davon erfolgt.

14. Verfahren nach einem beliebigen der vorhergehenden Ansprüche, wobei das Verfahren ferner einen Schritt des Zugebens von Aktivkohle zu dem Filtrat umfasst, um das behandelte Wasser umfassend Phenol oder Derivate davon und/oder Anilin oder Derivate zu erhalten, in einer Menge von weniger als 1 ppm oder vernachlässigbar, wobei das Filtrat mit Aktivkohle bei einer Temperatur im Bereich von 20 °C bis 30 °C für eine Zeitdauer im Bereich von 2 bis 10 Stunden behandelt wird.

15. Verfahren nach einem beliebigen der vorhergehenden Ansprüche, wobei das Derivat von Phenol mindestens eines ist, ausgewählt aus der Gruppe bestehend aus alkylsubstituiertem Phenol, arylsubstituiertem Phenol, heteroarylsubstituiertem Phenol, allylsubstituiertem Phenol, cycloalkylsubstituiertem Phenol und heteroatomsubstituiertem Phenol, oder wobei das Derivat von Anilin mindestens eines ist, ausgewählt aus der Gruppe bestehend aus alkylsubstituiertem Anilin, arylsubstituiertem Anilin, heteroarylsubstituiertem Anilin, allylsubstituiertem Anilin, cycloalkylsubstituiertem Anilin und heteroatomsubstituiertem Anilin.

## Revendications

1. Procédé de traitement des eaux usées contenant du phénol ou des dérivés de celui-ci, ledit procédé comprenant les étapes suivantes :
(i) ajustement du pH des eaux usées à plus de 9 pour obtenir des ions phénoxyde ;
(ii) refroidissement des eaux usées à pH ajusté à une température inférieure à 10 °C ;
(iii) ajout des eaux usées à pH ajusté contenant les ions phénoxyde, à une suspension aqueuse de sel de diazonium d'aniline ou de dérivés de celle-ci, lentement sous agitation, à une température inférieure à 10 °C, pour obtenir un mélange réactionnel ; dans lequel la suspension aqueuse de sel de diazonium d'aniline ou de dérivés de celle-ci est préparée en faisant réagir de l'aniline ou des dérivés de celle-ci, dans de l'eau avec un nitrite de métal alcalin et de l'acide chlorhydrique à une température dans la plage de 0 °C à 5 °C à un pH inférieur à 2 ;
(iv) ajustement du pH du mélange réactionnel dans la plage de 5 à 7,5, et agitation à une température dans la plage de 20 °C à 30 °C pour obtenir un mélange de produits comprenant un composé azoïque, dans lequel le composé azoïque est le 4-hydroxyazobenzène ou des dérivés de celui-ci ; et
(v) séparation du composé azoïque du mélange de produits pour obtenir un filtrat contenant de l'eau traitée, dans laquelle la teneur en phénol ou en dérivés de celui-ci, dans le filtrat est inférieure à 200 ppm.

2. Procédé selon la revendication 1, dans lequel la quantité de phénol ou de dérivés de celui-ci, dans les eaux usées est dans la plage de 0,1 % en poids à 50 % en poids.

3. Procédé selon la revendication 1, dans lequel à l'étape (i), le pH est ajusté en ajoutant un alcali choisi dans le groupe constitué par l'hydroxyde de sodium, l'hydroxyde de potassium, l'hydroxyde d'ammonium, l'hydroxyde de lithium, le carbonate de sodium, le bicarbonate de sodium, le carbonate de potassium, le bicarbonate de potassium et le carbonate d'ammonium, aux eaux usées, dans lequel l'alcali est ajouté sous la forme d'une solution aqueuse ayant une concentration dans la plage de 40 % en poids à 50 % en poids.

4. Procédé selon la revendication 1, dans lequel ledit nitrite de métal alcalin est choisi dans le groupe constitué par le nitrite de sodium, le nitrite de potassium et le nitrite de lithium.

5. Procédé selon la revendication 4, dans lequel le nitrite de métal alcalin est ajouté sous la forme d'une solution aqueuse ayant une concentration en nitrite de métal alcalin dans la plage de 25 % en poids à 40 % en poids, ou dans lequel le rapport molaire de l'aniline ou de dérivés de celle-ci, au nitrite de métal alcalin est dans la plage de 1:0,9 à 1:1,5.

6. Procédé selon la revendication 1, dans lequel la séparation est effectuée par filtration ou centrifugation, et dans lequel le composé azoïque est récupéré et purifié.

7. Procédé de traitement des eaux usées contenant de l'aniline ou des dérivés de celle-ci, ledit procédé comprenant les étapes suivantes :
(i) ajustement du pH des eaux usées à moins de 2 ;
(ii) refroidissement des eaux usées à pH ajusté à une température dans la plage de 0 °C à 5 °C ;
(iii) diazotation de l'aniline ou des dérivés de celle-ci, dans les eaux usées à pH ajusté, en la faisant réagir avec un nitrite de métal alcalin et de l'acide chlorhydrique, à une température dans la plage de 0 °C à 5 °C, pour obtenir un sel de diazonium d'aniline ou de dérivés de celle-ci ;
(iv) ajout d'ions phénoxyde au sel de diazonium d'aniline ou de dérivés de celle-ci, lentement sous agitation, à une température inférieure à 10 °C, pour obtenir un mélange réactionnel ; dans lequel les ions phénoxyde sont préparés en ajoutant une base à une solution aqueuse de phénol ou de dérivés de celui-ci, pour atteindre un pH dans la plage de 10 à 12 ;
(v) ajustement du pH du mélange réactionnel dans la plage de 5 à 7,5, et agitation à une température dans la plage de 20 °C à 30 °C pour obtenir un mélange de produits comprenant un composé azoïque, dans lequel le composé azoïque est le 4-hydroxyazobenzène ou des dérivés de celui-ci ; et
(vi) séparation du composé azoïque du mélange de produits pour obtenir un filtrat contenant de l'eau traitée, dans laquelle la teneur en aniline ou en dérivés de celle-ci, dans le filtrat est inférieure à 100 ppm.

8. Procédé selon la revendication 7, dans lequel la quantité d'aniline ou de dérivés de celle-ci, dans les eaux usées est dans la plage de 0,1 % en poids à 50 % en poids.

9. Procédé selon la revendication 7, dans lequel à l'étape (i), le pH des eaux usées est ajusté, en ajoutant de l'acide chlorhydrique concentré ayant une concentration dans la plage de 30 % à 40 %, ou dans lequel le rapport molaire de l'aniline, ou de dérivés de celle-ci, à l'acide chlorhydrique est dans la plage de 1:2,5 à 1:3,5.

10. Procédé selon la revendication 7, dans lequel ladite base est choisie dans le groupe constitué par l'hydroxyde de sodium, l'hydroxyde de potassium, l'hydroxyde d'ammonium, l'hydroxyde de lithium, le carbonate de sodium, le bicarbonate de sodium, le carbonate de potassium, le bicarbonate de potassium et le carbonate d'ammonium.

11. Procédé selon l'une quelconque des revendications précédentes, dans lequel le procédé comprend la prédétermination de la concentration en phénol ou en dérivés de celui-ci, ou en aniline ou en dérivés de celle-ci, dans les eaux usées, avant l'étape (i) d'ajustement de pH.

12. Procédé de traitement des eaux usées contenant une combinaison d'aniline ou de dérivés de celle-ci et de phénol ou de dérivés de celui-ci, ledit procédé comprenant les étapes suivantes :
(i) prédétermination de la concentration en aniline ou en dérivés de celle-ci et en phénol ou en dérivés de celui-ci, dans les eaux usées ;
(ii) ajustement du rapport molaire du phénol ou des dérivés de celui-ci à l'aniline ou des dérivés de celle-ci, dans les eaux usées, dans la plage de 1:1,05 à 1:1,5 et ajustement du pH des eaux usées à moins de 2 ;
(iii) refroidissement des eaux usées à pH ajusté à une température dans la plage de 0 °C à 5 °C ;
(iv) diazotation de l'aniline ou des dérivés de celle-ci, dans les eaux usées à pH ajusté, en la faisant réagir avec un nitrite de métal alcalin et de l'acide chlorhydrique, à une température dans la plage de 0 °C à 5 °C, pour obtenir un sel de diazonium d'aniline ou de dérivés de celle-ci ;
(v) ajustement du pH du mélange diazoté à plus de 7, pour former des ions phénoxyde et agitation à une température dans la plage de 20 °C à 30 °C pour obtenir un mélange de produits comprenant un composé azoïque, dans lequel le composé azoïque est le 4-hydroxyazobenzène ou des dérivés de celui-ci ; et
(vi) séparation du composé azoïque du mélange de produits pour obtenir un filtrat contenant de l'eau traitée, dans laquelle la teneur en aniline ou en dérivés de celle-ci, dans le filtrat, est inférieure à 100 ppm et la teneur en phénol ou en dérivés de celui-ci, dans le filtrat, est inférieur inférieur à 200 ppm.

13. Procédé selon la revendication 12, dans lequel l'étape (ii) d'ajustement du rapport molaire du phénol ou des dérivés de celui-ci à l'aniline ou des dérivés de celle-ci, dans les eaux usées, est effectuée par addition externe du phénol ou des dérivés de celui-ci et/ou de l'aniline ou des dérivés de celle-ci.

14. Procédé selon l'une quelconque des revendications précédentes, dans lequel le procédé comprend en outre une étape d'ajout de charbon actif au filtrat pour obtenir l'eau traitée comprenant du phénol ou des dérivés de celui-ci et/ou de l'aniline ou des dérivés de celle-ci, en une quantité inférieure à 1 ppm ou négligeable, dans lequel le filtrat est traité avec du charbon actif à une température dans la plage de 20 °C à 30 °C, pendant une période de temps dans la plage de 2 à 10 heures.

15. Procédé selon l'une quelconque des revendications précédentes, dans lequel le dérivé de phénol est au moins un dérivé choisi dans le groupe constitué par un phénol substitué par un alkyle, un phénol substitué par un aryle, un phénol substitué par un hétéroaryle, un phénol substitué par un allyle, un phénol substitué par un cycloalkyle et un phénol substitué par un hétéroatome, ou dans lequel le dérivé d'aniline est au moins un dérivé choisi dans le groupe constitué par une aniline substituée par un alkyle, une aniline substituée par un aryle, une aniline substituée par un hétéroaryle, une aniline substituée par un allyle, une aniline substituée par un cycloalkyle et une aniline substituée par un hétéroatome.
